**Europäisches Patentamt**

**European Patent Office**

**Office européen des brevets**

(19)

(11) Publication number: **0 358 254**

**A1**

(12) ## EUROPEAN PATENT APPLICATION

(21) Application number: **89202053.8**

(51) Int. Cl.⁵: **B65G 23/44**

(22) Date of filing: **08.08.89**

(30) Priority: **09.08.88 NL 8801986**

(43) Date of publication of application:
**14.03.90 Bulletin 90/11**

(84) Designated Contracting States:
**BE DE ES FR GB IT NL**

(71) Applicant: **KONSTRUKTIEWERKEN BERLIKUM B.V.**
**Bitgumerdijk 7**
**NI-9041 CB Berlikum(NL)**

(72) Inventor: **Bosje, Jelle**
**W. Lodewijkstraat 18A**
**NL-9076 DG St. Annaparochie(NL)**

(74) Representative: **Smulders, Theodorus A.H.J., Ir. et al**
**Vereenigde Octrooibureaux Nieuwe Parklaan 107**
**NL-2587 BP 's-Gravenhage(NL)**

(54) Conveyor floor comprising a belt conveyor device.

(57) A conveyor floor comprising at least one belt conveyor device including an endless belt lapped around return rollers and presenting an upper conveyor track having a transport position wherein the conveyor track is disposed above the conveyor floor. The belt conveyor device further includes driving means for driving the belt and at least one load-dependent belt tensioning device. A control device coupled to the driving means and to the belt tensioning device supplies such control signals to the tensioning device that the tensioning force exerted on the belt is at any moment proportional to the belt driving torque delivered by the driving means.

EP 0 358 254 A1

FIG.2

## A conveyor floor comprising a belt conveyor device

This invention relates to a conveyor floor comprising at least one belt conveyor device including an endless belt lapped around return rollers, said belt presenting an upper conveyor track having a position of conveyance wherein the conveyor track is located above the conveyor floor, said belt conveyor device further including driving means for driving the belt.

A conveyor floor of this type is known from European patent application 0002106. The known conveyor floor comprises a belt conveyor device provided with a plurality of support rollers disposed between the return rollers, said support rollers supporting the underside of the conveyor track of the belt, at least in the transport position of the belt conveyor device. The support rollers can be lifted jointly relatively to the conveyor floor into the transport position by means of an inflatable hose disposed underneath the support rollers. In the transport position, the support rollers extend to above the conveyor floor, so that articles placed on the belt can be moved over the floor by means of the belt supported by the support rollers. The support rollers are mounted in a U-shaped receptacle which, in its turn, is placed in a trough, and an air hose is disposed between the trough bottom and the receptacle. The return track of the belt lies underneath the trough.

A problem that may arise in the known device is that the belt is damaged or even breaks as a result of stretch and/or a slipping and/or irregular, shockwise drive. The stretch occurs as a result of temperature variations and of the driving force exerted on the belt in operation. The chance of a slipping drive is especially present when a relatively smooth belt is used. However, this latter is desirable, because the belt should be capable, if necessary, of being pulled underneath the transported articles, e.g. pallets, when the articles have reached for instance the end of the conveyor floor. The belt thus pulled underneath the then stationary articles may not damage the articles and should have as little friction as possible with respect to the stationary articles.

The slip of the drive is enhanced if the belt should be fouled. An irregular, shockwise drive may be the result of an occasionally slipping drive but also of stretch in the belt.

It is an object of the present invention to remove these drawbacks. To that end, according to a first aspect of the present invention, a conveyor floor of the above described type is characterized by at least one load-dependent belt tensioner and a control device coupled with the driving means and with the belt tensioner and which, in operation, supplies such control signals to the tensioner that the tensioning force exerted on the belt is at any moment proportional to the belt driving torque provided by the driving means.

The invention will now be described with reference to the accompanying drawings.

Fig. 1 is a diagrammatic top view of an example of a conveyor floor having two belt conveyor devices;

Fig. 2 is a diagrammatic side view of an example of a belt conveyor device according to the invention;

Fig. 3 diagrammatically shows a hydraulic control and driving unit for the belt conveyor device shown in Fig. 2;

Fig. 4 is a diagrammatic side view of a variant of the device shown in Fig. 2;

Fig. 5 diagrammatically shows a hydraulic control unit for the device shown in Fig. 4;

Fig. 6 is a diagrammatic detail view of Fig. 2 and Fig. 4;

Fig. 7 is a diagrammatic cross-sectional view of an example of a belt conveyor device according to the invention; and

Fig. 8 shows a variant of Fig. 7.

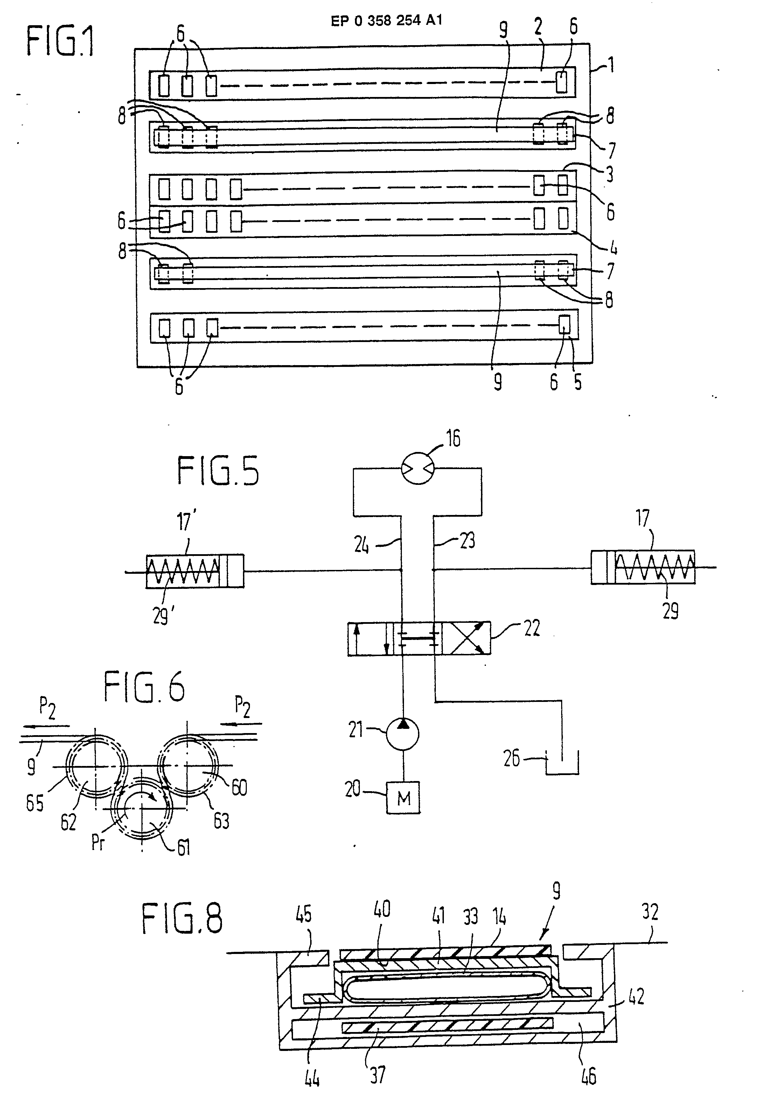

Fig. 1 is a diagrammatic top view of a conveyor floor 1, which may be a stationary conveyor floor but also a conveyor floor of e.g. a motorlorry.

The conveyor floor shown comprises four roller tracks 2,3,4,5, including freely rotatable rollers 6. The rollers have a transport position in which they extend to above the conveyor floor. The rollers can then carry an article placed on the floor, e.g. a case, box, or pallet, and the displacement of the articles carried by the rollers then only requires a slight pushing force. The rollers can also be brought, in specific embodiments, into a lowered position, in which they do not extend to above the conveyor floor. An article placed on the conveyor floor then rests firmly on the floor itself and is not carried by the rollers.

For displacing articles carried by the roller tracks, there are provided in the example shown two belt conveyor devices 7, which, in this example, are constructed similarly to these roller tracks and are also adapted for up and down movement, but are further provided with a belt 9 overlying the rollers 8.

Articles supported on roller tracks 2,3 can thus be carried along by the belt of the intermediate belt conveyor device 7 to the desired position of the conveyor floor. To that end, there are provided belt driving means, not shown in Fig. 1.

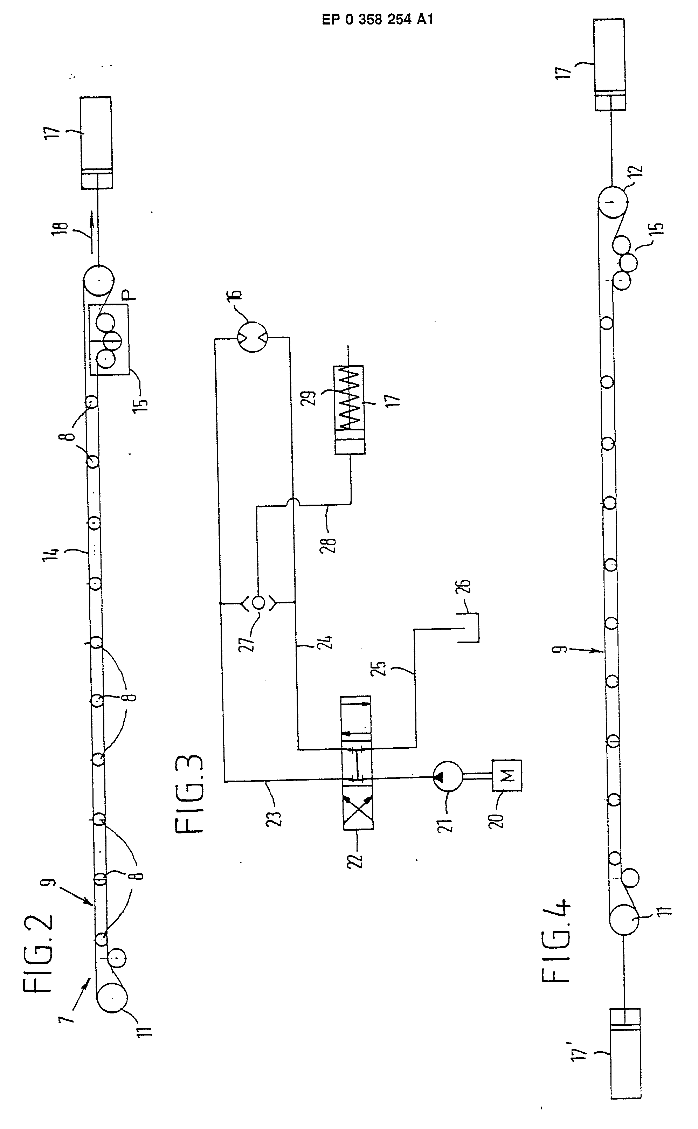

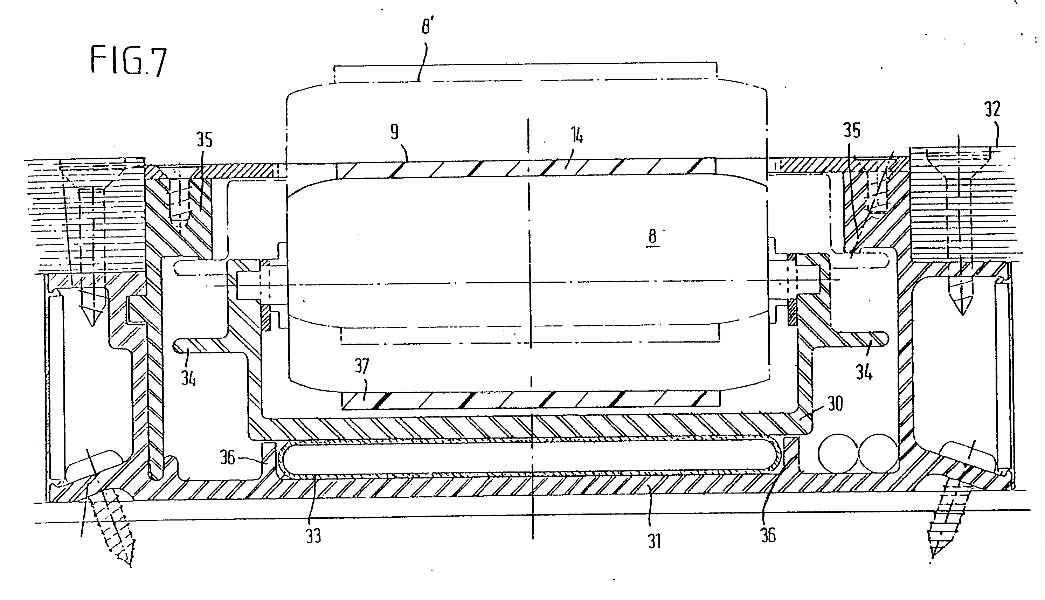

Fig. 2 is a diagrammatic side view of a belt conveyor device 7 according to the invention. Belt 9 is an endless belt lapped around two return rollers 11,12 at the two ends of the belt conveyor device. The upper part of the belt or the transport track 14 of the belt, in this example, is supported by rollers 8, which can be moved up and down jointly or in groups between a raised transport position and a lowered rest position. The rollers can be mounted for up and down movement in a trough in any of the manners known for the purpose, said trough being covered with a plate having passages for the rollers. An improved construction applicable advantageously within the scope of the present invention will be further described hereinafter with reference to Fig. 7.

It is observed that the belt of a belt conveyor device according to the invention can also be supported by one or more smooth plates, which may be adapted for up and down movement between a raised transport position and a lowered rest position.

Fig. 2 further shows a driving device 15, specially designed for driving an endless smooth belt without slip. As shown in more detail in Fig. 6, the driving device includes a unit of three driving rollers 60,61,62, which are coupled to each other through gears 63,64,65 shown diagrammatically. Besides, one of the rollers, e.g. roller 61, is coupled through a suitable gear transmission or rope transmission or the like with a driving member, e.g. a hydromotor 16 (Fig. 3). The central roller 61 lies close to rollers 60 and 62 and the belt lies successively around roller 60 (or 62), roller 61 and roller 62 (or 60) and, in operation, depending on the driving direction, is pulled taut by either roller 60 or roller 62 against the two other rollers to prevent slip. In Fig. 6 the driving direction of roller 61 is clockwise (arrow P1) and the driven part of belt 9, consequently, moves to the left, as indicated by arrows P2. As the slip between the driving rollers and the belt may result in appreciable wear and tear of the belt, the driving rollers are preferably provided with a slightly resilient, yet solid, non-skid cover, so that the belt can be pulled taut against the driving rollers. The cover may be a sheath of a suitable rubber type or a suitable synthetic plastics type.

As a result of the pulling force exercised on the belt in operation and also due to temperature variations, stretch of the belt may occur. Such a stretch, in the event of a circulating endless belt, results in a kind of jamming elsewhere in the endless track and may also lead to a shockwise displacement of the articles to be conveyed and/or to slip of the belt. Although the belt stretch could be removed conventionally by means of a belt tensioning roller, use is made according to the present invention of a load-dependent belt tensioner.

To that effect, there is provided, in the example shown in Fig. 2 and Fig. 3, a tensioning cylinder 17, which is coupled with the shaft of the return roller 12 and exerts a pulling force thereon, designated by an arrow 18, which depends on the load of the belt. To that end, tensioning cylinder 17 is energized in dependence on the instantaneous torque delivered by the driving member.

Fig. 3 diagrammatically shows a hydraulic control and driving device for a belt conveyor device for a conveyor floor according to the invention. The device shown by way of example comprises a pump 21 driven by a motor 20, e.g. an electric motor, which pump 21 is adapted to supply hydraulic oil from a reservoir 26 to a hydromotor 16 through a valve block 22 and a line 23 or 24. Hydromotor 16 is connected to the oil reservoir 26 through the valve block and a return line 25.

In the position of the valve block shown, the connection between the pump 21 and the hydromotor is broken. When the valve block slides to the left, line 23 constitutes the supply line of the hydromotor and line 24 together with line 25 the return line. The hydromotor then has a first direction of rotation corresponding with either of the two possible directions of transport of the belt conveyor device.

When the valve block has moved to the right, line 24 constitutes the supply line of the hydromotor and line 23 together with line 25 forms the return line. The hydromotor then has a direction of rotation opposite to the first direction of rotation.

Between lines 23 and 24, there is connected a switch valve 27, which connects that line of lines 23 and 24 in which the higher pressure prevails to the tensioning cylinder 17 through a control line 28. The tensioning cylinder is in Fig. 3, further provided with a return spring 29.

As the instantaneous pressure in the supply line of the hydromotor is proportional to the torque delivered instantaneously by hydromotor 16, the energization of the tensioning cylinder is at any moment automatically proportional to the torque delivered and hence to the load of the belt.

It is observed that naturally more than one tensioning cylinder can cooperate with one and the same return roller.

Figs. 4 and 5 diagrammatically show an embodiment wherein the two return rollers 11,12 are provided with a tensioning cylinder 17 and 17′, respectively. Here again, the tensioning cylinders may be coupled to lines 23,24 through a switch valve, so that the two tensioning cylinders are always energized simultaneously.

In the example shown, tensioning cylinders 17,17′, however, are coupled directly to lines 23 and 24, respectively, so that at any time only one of the tensioning cylinders is energized, depending on the direction of rotation of the hydromotor and hence of the direction of transport.

This is connected with the fact that the belt stretch manifests itself most strongly directly downstream of the driving rollers, as viewed in the instantaneous direction of movement of the belt at that location.

The stretch manifests itself by sagging or jamming and can best be remedied by tensioning the return roller present on the same side of the driving rollers.

If the belt in Fig. 4 should move clockwise, the belt stretch would consequently manifest itself at the left of driving device 15, and cylinder 17′ should be energized.

It is observed that it is possible, if desired, to use a separate tensioning roller for tensioning the belt which roller is coupled with a cylinder controlled in the manner described. Such a tensioning roller can be used, whether or not in combination with one or two return rollers functioning as tensioning rollers in the manner described.

Fig. 7 is a diagrammatic cross-sectional view of an example of a belt conveyor device according to the invention having a transport track adapted for up and down movement.

Fig. 7 shows a roller 8 in the lowered position. The raised transport position is indicated with broken lines at 8′. The roller is mounted for free rotation in a U-shaped receptacle 30. Receptacle 30 can advantageously be a common receptacle for a number of rollers or all rollers of the conveyor device. In its turn, receptacle 30 is placed in a U-shaped trough 31 suitably recessed in the conveyor floor. The surface of the conveyor floor is indicated at 32. Lying between the bottom of the U-shaped receptacle 30 and the bottom of the U-shaped trough 31 is a hose 33 inflatable with liquid or air. By pumping up the hose, receptacle 30 can be raised so as to bring rollers 8 into the transport position 8′ shown by broken lines. Receptacle 30 and trough 31 are provided with coacting stops 34,35 for delimiting the upward movement of receptacle 30. Furthermore, the bottom of the U-shaped trough is provided with longitudinal ribs 36, which fix and protect hose 33.

In this embodiment, the return part 37 of belt 9 lies between rollers 8 and the bottom of U-shaped receptacle 30. As a result, the return part is effectively protected against possible fouling and/or damage, which prolongs the life of the belt and reduces the chance of slip due to fouling of the belt surface.

Fig. 8 finally, diagrammatically shows an embodiment, also with a transport track adapted for up and down movement, wherein no rollers are used for supporting the belt but one or more plates movable up and down.

The transport track 14 of belt 9 rests on the platelike smooth top face 40 of a U-shaped member 41, inverted in this example. The inverted U-shaped member is again housed in a U-shaped trough 42 and an inflatable hose 33 is provided between bottom 43 of the trough and the U-shaped member.

Stops 44 and 45 delimit the upward movement of the platelike surface.

Return part 37 of the belt lies underneath the bottom 43 of the U-shaped trough. For protecting the belt, the trough is preferably provided with a double bottom forming a chamber 46 for the return part of the belt.

It is observed that, after reading the above, various modifications will readily occur to those skilled in the art. For instance, a belt conveyor device can be provided with more than one set of driving rollers. Furthermore, the driving motor may be a different type of motor, e.g. an electric motor or a pneumatically driven motor. Likewise, use can be made e.g. of an electrically energizable tensioning device instead of a tensioning cylinder. Also, a hydraulic tensioning cylinder can be controlled electrically by means of a controllable magnetic valve.

As stated before, a belt conveyor device according to the invention may be a stationary device arranged e.g. in a factory or warehouse or the like. In that case, the device often does not need to be liftable and lowerable. When used e.g. in motorlorries, however, a belt conveyor device according to the invention is normally lowerable and liftable. These and similar modifications are deemed to fall within the scope of the present invention.

## Claims

1. A conveyor floor comprising at least one belt conveyor device including an endless belt lapped around return rollers and presenting an upper conveyor track having a transport position wherein the conveyor track is disposed above the conveyor floor, said belt conveyor device further including driving means for driving the belt, characterized by at least one load-dependent belt tensioning device and a control device coupled to the driving means and to the belt tensioning device, and which control device, in operation, supplies such control signals to the tensioning device that the tensioning force exerted on the belt is at any moment proportional to the belt driving torque delivered by the driving means.

2. A conveyor floor as claimed in claim 1, characterized in that the belt tensioning device includes at least one of the return rollers and at least one tensioning member coupled to the shaft of the return roller.

3. A conveyor device as claimed in claim 1 or 2, characterized in that the belt tensioning device includes at least one tensioning roller and at least one tensioning cylinder coupled to the shaft of each tensioning roller, which cylinder, in operation, is energized in dependence on the torque instantaneously delivered by a driving motor associated with the driving means.

4. A conveyor device as claimed in claim 3, characterized in that at least one tensioning cylinder is coupled to the shaft of at least one of the return rollers; that the driving motor is a hydromotor, which is connected to two lines, either one or the other being the pressure line, depending on the direction of rotation set; and that a control line of the tensioning cylinder(s) is always connected to the pressure line through a switch valve connected between the two connecting lines of the hydromotor.

5. A conveyor device as claimed in claim 3, characterized in that the shaft of each return roller is coupled to at least one tensioning cylinder; that the driving motor is a hydromotor connected to two lines, either one or the other of which lines is the pressure line, depending on the direction of rotation set; and that the control line of the tensioning cylinder(s) associated with one return roller is fixedly connected to one line, while the control line of the tensioning cylinder(s) associated with the other return roller is connected to the other line.

6. A conveyor floor as claimed in any of the preceding claims, characterized in that the driving means include at least one set of three driving rollers, with the belt being passed over two outer rollers and about a central roller and, in operation, being pulled by either of the two outer rollers against the central roller and the other outer roller, the central roller being provided with a gear engaging with corresponding gears of each of two other rollers.

7. A conveyor floor as claimed in claim 6, characterized in that the driving rollers are provided with a slightly resilient non-skid cover.

8. A conveyor floor as claimed in any of the preceding claims, characterized in that between the return rollers the belt lies on supporting members disposed in a U-shaped trough and that the return part of the belt extends through said trough.

9. A conveyor floor as claimed in claim 8, characterized in that the supporting members are rollers mounted for free rotation in a U-shaped receptacle, which, in its turn, is placed in the U-shaped trough, while between the bottom of the U-shaped receptacle and the bottom of the U-shaped trough, there is provided an inflatable hose to bring the rollers from a lowered position into the transport position, the return part of the belt extending between the bottom of the U-shaped receptacle and the rollers.

10. A conveyor floor as claimed in claim 9, characterized in that the U-shaped receptacle and the U-shaped trough are provided with coacting stop members delimiting the upward movement of the U-shaped receptacle.

11. A conveyor floor as claimed in claim 8, characterized in that the supporting members include at least one platelike portion over which the belt can slide, and that an inflatable hose is provided between said platelike portion and the bottom of the U-shaped trough.

12. A conveyor floor as claimed in claim 11, characterized in that the U-shaped trough has a double bottom and that the return part extends within the chamber formed by the double bottom.

13. A conveyor floor as claimed in claim 11 or 12, characterized in that the platelike portion and the U-shaped trough have coacting stop members delimiting the upward movement of the platelike portion.

FIG.1

FIG.5

FIG.6

FIG.8

# FIG.2

# FIG.3

# FIG.4

EP 0 358 254 A1

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-B-1 130 355 (VON HIPPEL) * Whole document * | 1-3 | B 65 G 23/44 |
| A | | 4 | |
| | --- | | |
| X | FR-A-2 442 201 (DOWTY MECO) * Whole document * | 1-3 | |
| | --- | | |
| X | US-A-3 712 457 (PELZER) * Whole document * | 1-3 | |
| | --- | | |
| X | GB-A- 944 100 (THE COUNCIL FOR SCIENTIFIC AND INDUSTRIAL RESEARCH) * Whole document * | 1-6 | |
| | ----- | | TECHNICAL FIELDS SEARCHED (Int. Cl.5) |
| | | | B 65 G |

The present search report has been drawn up for all claims

| Place of search | Date of completion of the search | Examiner |
|---|---|---|
| THE HAGUE | 20-11-1989 | OSTYN T.J.M. |